# EUROPÄISCHE PATENTSCHRIFT

(11) **EP 1 693 343 B1**
(45) Veröffentlichungstag und Bekanntmachung des Hinweises auf die Patenterteilung: **08.09.2010**
(21) Anmeldenummer: 05005928.6
(22) Anmeldetag: 18.03.2005
(51) Int. Cl.: C01B 33/18, C08K 3/36, C09C 1/30

(54) **Pyrogen hergestelltes Siliciumdioxidpulver**
Pyrogenic silica
Silice pyrogénique

(30) Priorität: 12.01.2005 DE 102005001408
(43) Veröffentlichungstag der Anmeldung: 23.08.2006
(73) Patentinhaber: Evonik Degussa GmbH, 45128 Essen (DE)
(72) Erfinder: Schumacher, Kai, Dr., 65719 Hofheim (DE); Kerner, Dieter, Dr., 63450 Hanau (DE); Schilling, Roland, 63579 Freigericht (DE); Flesch, Jürgen, 79539 Lörrach (DE); Schiener, Thomas, 63755 Alzenau (DE)

(56) Entgegenhaltungen:
- EP-A- 1 486 461
- WO-A-2005/095503
- DE-A1- 10 258 858

## Beschreibung

Die Erfindung betrifft ein pyrogen hergestelltes Siliciumdioxidpulver, dessen Herstellung und Verwendung. Die Erfindung betrifft weiterhin einen Polyester, welcher das pyrogen hergestellte Siliciumdioxidpulver enthält.

Die Flammenhydrolyse zur Herstellung von Siliciumdioxid ist ein seit langem bekanntes, großtechnisch durchgeführtes Verfahren. Bei diesem Verfahren wird ein verdampftes oder gasförmiges hydrolysierbares Siliciumhalogenid mit einer Flamme vermengt, die durch Verbrennung eines wasserbildenden, Wasserstoff enthaltenden Brennstoffs und eines sauerstoffhaltigen Gases gebildet worden ist. Die Verbrennungsflamme stellt dabei Wasser für die Hydrolyse des Siliciumhalogenides und genügend Wärme zur Hydrolysenreaktion zur Verfügung. Das in den Restgasen der Reaktion mitgetragene Siliciumdioxidpulver wird üblichen Kühl- und Feststofftrennverfahren unterworfen. Gewöhnlich wird Siliciumtetrachlorid eingesetzt. Es ist jedoch auch bekannt, Dichlorsilan, Trichlorsilan einzusetzen. Beim Einsatz von kohlenstoffhaltigen Einsatzstoffen, wie beispielsweise Methyltrichlorsilan, Dimethyldichlorsilan, Methyldichlorsilan, Dibutyldichlorsilan, Äthyltrichlorsilan, Propyltrichlorsilan findet zusätzlich ein Oxidationsprozess zur Überführung des Kohlenstoffes in Kohlendioxid statt.

In Folge wird ein Siliciumdioxidpulver, welches bei einem Verfahren bei dem beide Reaktionstypen, nämlich Flammenhydrolyse und Oxidation, ablaufen, gebildet wird, als ein pyrogen hergestelltes Siliciumdioxid bezeichnet.

Bei der Reaktion werden zunächst hochdisperse, nicht poröse Primärpartikel gebildet, die im weiteren Reaktionsverlauf zu Aggregaten zusammenwachsen und diese sich weiter zu Agglomeraten zusammenlagern können. Die BET-Oberfläche dieser Primärpartikel liegt in der Regel zwischen 5 und 600 m²/g. Das Pulver weist auf seiner Oberfläche freie Hydroxylgruppen auf.

Das Dokument EP 1 486 461 A1 offenbart ein "flammenhydrolytisch hergestelltes Siliciumdioxidpulver mit einer BET-Oberfläche zwischen 10 und 600 m². Dazu beschreibt das Dokument WO 2005/095503 A1 ein Produkt, dass eine BET-Oberfläche von 200 +/-25 m².

Das so hergestellte Siliciumdioxidpulver findet in vielen Anwendungsbereichen Verwendung, beispielsweise als Verdickungsmittel in Polymeren, beispielsweise in Polyesterharzen.

Polyesterharze können durch Polykondensation eines mehrwertigen Alkohols mit einer Dicarbonsäure erhalten werden. Gewöhnlich enthalten sie eine Substanz, welche als Verdünnungsmittel und als Comonomer während des Härtungsprozesses wirkt. In der Regel ist dies Styrol. Aufgrund seiner ausgezeichneten Verdickungswirkung wird pyrogen hergestelltes Siliciumdioxidpulver seit langem in Polyesterharzen eingesetzt. Neben der Verdickungswirkung kommt auch der Einarbeitbarkeit in den Polyester große Bedeutung zu. Bei Siliciumdioxidpulvern nach dem Stand der Technik liegt oft nur einer dieser Parameter in einem gewünschten Bereich. Darüberhinaus gilt, dass auch die einzelnen Parameter, Verdickung und Einarbeitbarkeit, verbesserungswürdig sind.

Aufgabe der Erfindung ist es daher ein Siliciumdioxidpulver bereitzustellen, welches ein hohe Verdickungswirkung bei gleichzeitiger niedriger Einarbeitungszeit in Polymere, insbesondere Polyesterharze, aufweist.

Eine weitere Aufgabe der Erfindung ist ein Verfahren zur Herstellung des Siliciumdioxidpulvers bereitzustellen.

Weiterhin ist es Aufgabe der Erfindung eine Polyesterharz bereitzustellen, welches das erfindungsgemäße Siliciumdioxidpulver enthält.

Gegenstand der Erfindung ist ein pyrogen hergestelltes Siliciumdioxidpulver in Form von Aggregaten von Primärpartikeln, welches
- einer BET-Oberfläche von 200 ± 25 m²/g besitzt und bei dem die Aggregate
- eine mittlere Fläche von 7000 bis 12000 nm²,
- einen mittleren, äquivalenten Kreisdurchmesser (ECD = Equivalent Circle Diameter) von 80 bis 100 nm und
- einen mittleren Umfang von 850 bis 1050 nm aufweisen.

Dabei wird die BET-Oberfläche bestimmt nach DIN 66131.

Die Aggregatgrößen werden durch Bildanalyse mittels eines TEM Gerätes der Fa. Hitachi H 7500 und einer CCD-Kamera MegaView II, der Fa. SIS bestimmt. Die Bildvergrößerung zur Auswertung beträgt 30000:1 bei einer Pixeldichte von 3,2 nm. Die Anzahl der ausgewerteten Teilchen ist größer als 1000. Die Präparation erfolgt gemäss ASTM3849-89. Die untere Schwellwertgrenze in bezug auf Detektion liegt bei 50 Pixeln.

Die BET-Oberfläche kann bevorzugt 200 ± 15 m²/g und besonders bevorzugt 200 ± 10 m²/g sein.

Weiterhin kann ein erfindungsgemäßes pyrogen hergestelltes Siliciumdioxidpulver bevorzugt sein, bei dem die Aggregate
- eine mittlere Fläche von 7500 bis 9000 nm²,
- einen mittleren, äquivalenten Kreisdurchmesser von 83 bis 90 nm und
- einen mittleren Umfang von 870 bis 1000 nm aufweisen.

Weiterhin kann ein erfindungsgemäßes pyrogen hergestelltes Siliciumdioxidpulver bevorzugt sein, bei dem der maximale Aggregatdurchmesser zwischen 150 und 170 nm und der minimale Aggregatdurchmesser zwischen 90 und 110 nm ist.

Weiterhin kann ein erfindungsgemäßes pyrogen hergestelltes Siliciumdioxidpulver bevorzugt sein, bei dem der Chloridgehalt kleiner als 250 ppm ist. Besonders bevorzugt ist ein Chloridgehalt von weniger als 50 ppm.

Weiterhin kann ein erfindungsgemäßes pyrogen hergestelltes Siliciumdioxidpulver bevorzugt sein, bei dem der Kohlenstoffgehalt kleiner als 100 ppm ist. Besonders bevorzugt ist ein Kohlenstoffgehalt von weniger als 25 ppm.

Das erfindungsgemäße Siliciumdioxidpulver kann bei einer Konzentration von 2,5 Gew.-% in einem in Styrol gelösten Polyesterharz mit einer Ausgangsviskosität von 1300 ± 100 mPas (23°C) eine Verdickung von größer als 3400 mPas bewirken.

Weiterhin kann das erfindungsgemäße Siliciumdioxidpulver bei einer Konzentration von 2,5 Gew.-% in einem in Styrol gelösten Polyesterharz mit einer Ausgangsviskosität von 1300 ± 100 mPas eine wet-in Zeit von 140 Sekunden oder weniger bewirken.

Ein weiterer Gegenstand der Erfindung ist ein Verfahren zur Herstellung des erfindungsgemäßen Siliciumdioxidpulvers bei dem man
- ein Gemisch von Siliciumverbindungen, getrennt oder gemeinsam, verdampft, die Dämpfe mittels eines Traggases in eine Mischkammer überführt, mit
   - SiCl₄ als erster Komponente mit einem Anteil 60 bis 95 Gew.-% bezogen auf das Gemisch, und
   - einer zweiten Komponente ausgewählt aus der Gruppe umfassend H₃SiCl, H₂SiCl₂, HSiCl₃, CH₃SiCl₃, (CH₃)₂SiCl₂, (CH₃)₃SiCl, (n-C₃H₇)SiCl₃, mit einem Anteil von 5 bis 40 Gew.-%, bezogen auf das Gemisch,
- und getrennt hiervon ein Brenngas, Primärluft, die gegebenenfalls mit Sauerstoff angereichert und/oder vorerhitzt sein kann, in die Mischkammer überführt,
- das Gemisch aus dem Dampf der Siliciumchloride, Brenngas und Primärluft in einem Brenner zündet und die Flamme in eine Reaktionskammer hinein verbrennt,
- Sekundärluft, die die Flamme umgibt, in die Reaktionskammer einbringt, wobei das Verhältnis von Sekundärluft/Primärluft in einem Bereich von 0,05 bis 3, bevorzugt 0,15 bis 2, liegt,
- anschließend den Feststoff von gasförmigen Stoffen abtrennt, und nachfolgend den Feststoff mit Wasserdampf bei 250°C bis 750°C behandelt,
wobei
- die Gesamtmenge an Sauerstoff mindestens ausreichend ist zur vollständigen Verbrennung des Brenngases und der Siliciumverbindungen und
- die Menge der Einsatzstoffe bestehend aus Siliciumverbindungen, Brenngas, Primärluft und Sekundärluft so gewählt ist, dass eine adiabate Flammentemperatur T_{ad} von 1570 bis 1630°C resultiert, mit
   T_{ad} = Temperatur Einsatzstoffe + Summe der Reaktionsenthalpien der Teilreaktionen / Wärmekapazität der Stoffe, die die Reaktionskammer verlassen, umfassend Siliciumdioxid, Wasser, Chlorwasserstoff, Kohlendioxid Sauerstoff, Stickstoff, und gegebenenfalls des Traggases, wenn dieses nicht Luft oder Stickstoff ist,
   wobei die spezifische Wärmekapazität dieser Stoffe bei 1000°C zugrunde gelegt wird.

Die spezifischen Wärmekapazitäten können beispielsweise mit Hilfe des VDI-Wärmeatlas (Kapitel 7.1 bis 7.3 und 3.7, 8. Auflage) ermittelt werden.

Die Umsetzung der Siliciumverbindungen in Gegenwart von Sauerstoff und eines Brenngases liefert Siliciumdioxid, Wasser, Salzsäure und bei kohlenstoffhaltigen Siliciumverbindungen und/oder kohlenstoffhaltigen Brenngasen Kohlendioxid. Die Reaktionsenthalpien dieser Reaktionen können mittels dem Fachmann bekannter Standardwerken berechnet werden.

In Tabelle 1 sind einige ausgesuchte Werte von Reaktionsenthalpien der Umsetzung von Siliciumverbindungen in Gegenwart von Wasserstoff und Sauerstoff gegeben.

**Tabelle 1: Reaktionsenthalpien**

| | KJ/mol |
|---|---|
| H₂ | -241,8 |
| SiCl₄ | -620,1 |
| SiHCl₃ | -659,4 |
| SiH₂Cl₂ | -712,3 |
| C₃H₇SiCl₃ | -2700,2 |
| CH₃SiCl₃ | -928,3 |
| (CH₃)₃SiCl | -2733,8 |

Besonders bevorzugt können Methyltrichlorsilan (MTCS, CH₃SiCl₃), Trichlorsilan (TCS, SiHCl₃) und/oder Dichlorsilan (DCS, SiH₂Cl₂) eingesetzt werden.

Als Brenngase eignen sich Wasserstoff, Methan, Ethan, Propan und/oder Erdgas, wobei Wasserstoff bevorzugt ist.

Die Temperatur der Einsatzstoffe ist nicht limitiert, solange sie oberhalb der Siedetemperatur der höchst siedenden Siliciumverbindung liegt. Als vorteilhaft hat sich eine Temperatur der Einsatzstoffe von 90°C ± 40°C erwiesen.

Es kann ferner von Vorteil sein, wenn die Austrittsgeschwindigkeit des Reaktionsgemisches aus der Mischkammer in die Reaktionskammer 10 bis 80 m/s ist.

Ein weiterer Gegenstand der Erfindung ist ein Polyester, welches das erfindungsgemäße Siliciumdioxidpulver enthält.

Polyester sind bekannte Verbindungen, die u. a. zur Herstellung von Textilien verwendet werden. Sie werden beispielsweise in Ullmann's Encyclopedia of Industrial Chemistry Vol A 21 (1992) Seiten 227 bis 251 beschrieben. Die Herstellung von Polyesterfasern ist bekannt aus Ullmann's Encyclopedia of Industrial Chemistry Vol A 10 (1992) Seiten 579 bis 613.

Es können Abmischungen von 0,1 bis 100 Prozent der erfindungsgemäßen Siliciumdioxidpulvers mit anderen pyrogen hergestellten oder gefällten Kieselsäuren oder Bentoniten oder anderen in der bei der Herstellung von Polyestern üblichen Füllstoffen oder Mischungen dieser Füllstoffe eingesetzt werden.

Zur Herstellung von Polyestern werden bevorzugt Dispersionen, die das erfindungsgemäße Siliciumdioxidpulver und ein Glykol enthalten, eingesetzt, wobei das Glykol, vorzugsweise Ethylenglykol, mit einer organischen Säure auf bekanntem Wege verestert wird. Der Anteil des erfindungsgemäßen Silciumdioxidpulvers in der Dispersion kann bis zu 60 Gew.-% betragen.

Ein weiterer Gegenstand der Erfindung ist eine Silikonkautschukmasse, welche das erfindungsgemäße Siliciumdioxidpulver enthält.

### Beispiele

Die BET-Oberfläche wird bestimmt nach DIN 66131.

Wet-in-Zeit: In einen 350ml-Becher werden 100 g Ludopal^{®} P6, (Cokondensationsprodukt von 35 mol% Phthalsäureanhydrid und 65 mol% Maleinsäureanhydrid mit 2-Propandiol, gelöst in Styrol; BASF AG) eingewogen und im Wasserbad auf 25°C temperiert. Der Becher wird in den Aluminiumeinsatz der Haltevorrichtung des Dissolvers eingesetzt. Der Rührer wird auf die Solltiefe t = 10mm über Becherboden eingetaucht und mit einer Geschwindigkeit von 500 min⁻¹ gestartet. 3 g Siliciumdioxidpulver werden gleichmäßig auf die Harzoberfläche gegeben und die Stoppuhr gestartet. Es wird die Zeit gemessen, bis das Siliciumdoxidpulver in der Polyesterzusammensetzung eingesunken ist.

Verdickungswirkung: Zu 7,5 g Siliciumdioxidpulver werden 142,5 g einer Lösung eines ungesättigten Polyesterharzes in Styrol mit einer Viskosität von 1300 ± 150 mPas bei einer Temperatur von 22°C eingebracht und mittels eines Dissolvers bei 3000 min⁻¹ dispergiert. Geeignet als ungesättigtes Polyesterharz ist beispielsweise Pallatal^{®} P6-01, Fa. DSM Composite. 60 g dieser Dispersion werden mit weiteren 90 g des ungesättigten Polyesterharzes in Styrol versetzt und der Dispergiervorgang wird wiederholt. Als Verdickungswirkung wird der Viskositätswert in mPas der Dispersion bei 25°C, gemessen mit einem Rotationsviskosimeter bei einer Scherrate von 2,7 s⁻¹, bezeichnet.

### Beispiel 1: Herstellung eines Siliciumdioxidpulvers

70 kg/h Siliciumtetrachlorid und 35 kg/h Methyltrichlorsilan werden verdampft und mittels Stickstoff in die Mischkammer eines Brenners überführt. Gleichzeitig werden 40 Nm³/h Wasserstoff und 195 Nm³/h Primärluft in die Mischkammer gegeben. Das Gemisch weist eine Temperatur von 90°C auf. Es wird gezündet und in einer Flamme in einen Reaktionskammer hinein verbrannt. Zusätzlich werden 30 Nm³/h Sekundärluft, die die Flamme umgibt, in die Reaktionskammer eingebracht.

Die Reaktionsgase und das entstandene Siliciumdioxid werden durch Anlegen eines Unterdruckes durch ein Kühlsystem gesaugt und dabei auf Werte zwischen 100 und 160°C abgekühlt. In einem Filter oder Zyklon wird der Feststoff vom Abgasstrom abgetrennt und nachfolgend bei einer Temperatur von 450°C mit Wasserdampf behandelt.

Die Beispiele 2 bis 11 werden analog durchgeführt.

Tabelle 2 gibt die Einsatzstoffe und Mengen der Beispiele 1 bis 11 wieder.

Tabelle 3 zeigt die berechneten Werte für Reaktionsenthalpie, Wärmekapazität und adiabate Flammentemperatur.

Tabelle 4 zeigt analytische Daten der hergestellten Siliciumdioxidpulver, sowie dreier kommerziell erhältlicher pyrogen hergestellter Siliciumdioxidpulver (Beispiele 12 bis 14)

Die Beispiele 1 bis 5 ergeben erfindungsgemäße Pulver. Die Beispiele 5 bis 10 sind Vergleichsbeispiele.

In Beispiel 2 werden drei Siliciumkomponenten eingesetzt.

In den Beispielen 3 und 4 werden hohe, beziehungsweise niedrige Anteile der ersten Siliciumkomponente Siliciumtetrachlorid eingesetzt.

In Beispiel 5 wird innerhalb des beanspruchten Bereiches ein hohes Verhältnis Sekundärluft/Primärluft eingestellt.

In den Beispielen 6 und 7 sind Einstellungen gewählt, die zu einer adiabaten Flammentemperatur ausserhalb des beanspruchten Bereiches führen.

In Beispiel 8 wird nur eine Siliciumverbindung (SiCl₄) eingesetzt.

In Beispiel 9 ist das Verhältnis von Siliciumtetrachlorid zu den weiteren Siliciumverbindungen ausserhalb des beanspruchten Bereiches.

In Beispiel 10 wird keine Sekundärluft zugeführt.

In Beispiel 11 ist das Verhältnis Sekundärluft/Primärluft ausserhalb des beanspruchten Bereiches.

Die Beispiele zeigen, dass das erfindungsgemäße Siliciumdioxidpulver aus den Beispielen 1 bis 5 deutlich geringere Wet-in-Zeiten und eine deutlich höhere Verdickungswirkung aufweisen, als die Muster aus den Vergleichsbeispielen 6 bis 13.

Weiterhin zeigen die Beispiele, dass die mittlere Aggregatfläche, der mittlere ECD, der mittlere Aggregatumfang, der mittlere maximale Aggregatdurchmesser und der mittlere minimale Aggregatdurchmesser der erfindungsgemäßen Siliciumdioxidpulver kleiner sind als die entsprechenden Werte der Vergleichsbeispiele, mit Ausnahme des kommerziell erhältlichen Siliciumdioxidpulvers aus Beispiel 14. Hier ist die mittlere Aggregatfläche und der mittlere Aggregatumfang kleiner als in den Siliciumdioxidpulvern aus den erfindungsgemäßen Beispielen, jedoch ist die Benetzungszeit länger und die Verdickungswirkung geringer.

Die Beispiele 1 bis 5 zeigen weiterhin, wie ein bestimmter enger Bereich der adiabaten Flammentemperatur, hier von 1573 bis 1629°C, durch Variation der Einsatzstoffmengen erhalten werden kann.

Weiterhin zeigen die Vergleichsbeispiele 6 und 7, dass bei gleicher Zusammensetzung der Siliciumverbindungen wie im Beispiel 1, keine erfindungsgemäßen Siliciumdioxidpulver erhalten werden. Die erhaltenen Pulver weisen BET-Oberflächen ausserhalb des beanspruchten Bereiches auf. In den Vergleichsbeispielen 6 und 7 sind die adiabaten Flammtemperaturen ausserhalb des beanspruchten Bereiches.

In den Vergleichsbeispielen 8 bis 10 sind zwar die adiabaten Flammentemperaturen innerhalb des beanspruchten Bereiches, jedoch werden keine erfindungsgemäßen Siliciumdioxidpulver erhalten:

In den Beispielen 8 bis 10 ist die Zusammensetzung der Siliciumverbindungen ausserhalb des beanspruchten Bereiches. Wie der Tabelle 4 zu entnehmen ist, werden Pulver erhalten, deren mittlere Aggregatflächen, mittlere ECD, mittlere Aggregatumfänge, mittlere maximale Aggregatdurchmesser und mittlere minimale Aggregatdurchmesser größer sind als die der erfindungsgemäßen Siliciumdioxidpulver.

In Beispiel 11 ist das Verhältnis Sekundärluft/Primärluft mit 3,33 ausserhalb des beanspruchten Bereiches. Das erhaltene Siliciumdioxidpulver weist eine BET-Oberfläche weit ausserhalb des beanspruchten Bereiches auf.

**Tabelle 2: Einsatzstoffe und Einsatzmengen**

| | | **gemäß Erfindung** | | | | | **Vergleich** | | | | | |
|---|---|---|---|---|---|---|---|---|---|---|---|---|
| **Beispiel** | | **1** | **2** | **3** | **4** | **5** | **6** | **7** | **8** | **9** | **10** | **11** |
| Silicium-tetrachlorid | kg/h | 70 | 70 | 100 | 65 | 11 | 70 | 70 | 100 | 1 | 65 | 1 |
| 2. Silicium-komponente^{($)} | kg/h | MTCS 35 | MTCS 20 | TCS 25 | PTS 35 | MTCS 2 | MTCS 35 | MTCS 35 | - | MTCS 8 | PTS 35 | MTCS 8 |
| 3. Silicium-komponente^{($)} | kg/h | | PTS 15 | | | | | | | | | |
| Wasserstoff | Nm³/h | 40 | 34 | 41 | 31 | 11 | 46 | 36 | 32 | 3,5 | 31 | 17 |
| Primärluft | Nm³/h | 195 | 215 | 140 | 270 | 15 | 195 | 195 | 85 | 25 | 310 | 18 |
| Sekundärluft | Nm³/h | 30 | 30 | 30 | 40 | 30 | 30 | 30 | 30 | 5 | 0 | 60 |
| Sekundärluft/Primärluft | | 0,15 | 0,13 | 0,21 | 0,15 | 2 | 0,15 | 0,15 | 0,35 | 0,20 | 0 | 3,33 |
| Eingangstemperatur(*) | °C | 90 | 90 | 90 | 90 | 90 | 90 | 90 | 90 | 90 | 90 | 90 |
| V_{Brenner}⁺⁾ | m/s | 42, 5 | 44,9 | 33,6 | 53,8 | 45,5 | 43,6 | 41,8 | 22,4 | 60,4 | 61,2 | 55,6 |

| | | | | | | | | | | | | |
|---|---|---|---|---|---|---|---|---|---|---|---|---|
| (*) Für Gemisch aus H₂, Primärluft SiCl₄, 2. und ggf. 3. Siliciumkomponente ($) MTCS = Methyltrichlorsilan; TCS = Trichlorsilan; DCS = Dichlordisilan, MTS = Methyltrichlorsilan; (+) = Austrittsgeschwindigkeit aus Brenner | | | | | | | | | | | | |

**Tabelle 3: Reaktionsenthalpie, Wärmekapazität und adiabate Flammentemperatur**

| | | **gemäß Erfindung** | | | | | **Vergleich** | | | | | |
|---|---|---|---|---|---|---|---|---|---|---|---|---|
| **Beispiel** | | **1** | **2** | **3** | **4** | **5** | **6** | **7** | **8** | **9** | **10** | **11** |
| Summe Reaktionsenthalpien der Teilreaktionen | KW | -196,1 | -215,6 | -166,7 | -255,5 | -38,9 | -214,0 | -184,1 | -118,3 | -24,6 | -255,5 | -65 |
| Wärmekapazität Produkte | KJ/ S · K | 0,13 | 0,14 | 0,11 | 0,17 | 0,03 | 0,13 | 0,13 | 0,08 | 0,02 | 0,17 | 0,04 |
| adiabate Flammtemperatur | °C | 1573 | 1629 | 1595 | 1615 | 1581 | 1685 | 1497 | 1580 | 1585 | 1627 | 1616 |

**Tabelle 4 : Analytische Daten der Siliciumdioxidpulver**

| | | **gemäß Erfindung** | | | | | **Vergleich** | | | | | | | | |
|---|---|---|---|---|---|---|---|---|---|---|---|---|---|---|---|
| **Beispiel** | | **1** | **2** | **3** | **4** | **5** | **6** | **7** | **8** | **9** | **10** | **11** | **12^{($)}** | **13^{(&)}** | **14^{(§)}** |
| BET-Oberfläche | m²/g | 213 | 204 | 210 | 207 | 212 | 145 | 253 | 206 | 208 | 201 | 204 | 201 | 205 | 214 |
| Mittl. Aggregatfläche | nm² | 8838 | 9001 | 7663 | 8951 | 7433 | nb | nb | 10667 | 9849 | 12822 | nb | 11806 | 11267 | 6658 |
| Mittl. ECD | nm | 88 | 89 | 82 | 91 | 82 | nb | nb | 102 | 92 | 101 | nb | 96 | 99 | 73 |
| Mittl. Aggregatumfang | nm | 996 | 985 | 870 | 886 | 861 | nb | nb | 1029 | 1067 | 1281 | nb | 1195 | 1135 | 1050 |
| Mittl. max. Aggregat-0 | nm | 168 | 170 | 153 | 169 | 152 | nb | nb | 180 | 174 | 198 | nb | 185 | 188 | 142 |
| Mittl. min. Aggregat-0 | nm | 103 | 104 | 94 | 103 | 91 | nb | nb | 111 | 107 | 124 | nb | 113 | 116 | 89 |
| Mittl.Primärpartikel-∅ | nm | 10 | 10,8 | 10,5 | 9,8 | 9,6 | nb | nb | 11,7 | 10,9 | 11,8 | nb | 11 | 11,5 | 7 |
| C-Gehalt | ppm | 1 | 2 | <1 | 4 | 6 | nb | nb | <1 | 3 | 8 | 2 | <1 | 5 | 3 |
| Cl-Gehalt | ppm | 12 | 8 | 15 | 22 | 28 | nb | nb | 21 | 34 | 12 | 7 | 4 | 6 | 9 |
| Verdickung | mPas | 3970 | 3812 | 3661 | 4010 | 3800 | nb | nb | 3483 | 3805 | 3815 | 3796 | 3280 | 3327 | 3740 |
| Wet-in-Zeit | Sec | 63 | 102 | 48 | 114 | 81 | nb | nb | 331 | 225 | 489 | 891 | 162 | 184 | 144 |

| | | | | | | | | | | | | | | | |
|---|---|---|---|---|---|---|---|---|---|---|---|---|---|---|---|
| $: AE 200, Degussa; &: Wacker HDK N20; §14: Cabosil HP 60, Cabot; nb = nicht bestimmt | | | | | | | | | | | | | | | |

## Patentansprüche

1. Pyrogen hergestelltes Siliciumdioxidpulver, in Form von Aggregaten von Primärpartikeln,
**dadurch gekennzeichnet,**
**dass** es
- eine BET-Oberfläche von 200 ± 25 m²/g besitzt und die Aggregate
- eine mittlere Fläche von 7000 bis 12000 nm²,
- einen mittleren, äquivalenten Kreisdurchmesser (ECD = Equivalent Circle Diameter) von 80 bis 100 nm und
- einen mittleren Umfang von 850 bis 1050 nm aufweisen.

2. Pyrogen hergestelltes Siliciumdioxidpulver nach Anspruch 1,
**dadurch gekennzeichnet,**
**dass** die Aggregate
- eine mittlere Fläche von 7500 bis 9000 nm²,
- einen mittleren, äquivalenten Kreisdurchmesser von 83 bis 90 nm und
- einen mittleren Umfang von 870 bis 1000 nm aufweisen.

3. Pyrogen hergestelltes Siliciumdioxidpulver nach den Ansprüchen 1 oder 2,
**dadurch gekennzeichnet,**
**dass** der maximale Aggregatdurchmesser zwischen 150 und 170 nm und der minimale Aggregatdurchmesser zwischen 90 und 110 nm ist.

4. Pyrogen hergestelltes Siliciumdioxidpulver nach den Ansprüchen 1 bis 3,
**dadurch gekennzeichnet,**
**dass** der Chloridgehalt kleiner als 250 ppm ist.

5. Pyrogen hergestelltes Siliciumdioxidpulver nach den Ansprüchen 1 bis 4,
**dadurch gekennzeichnet,**
**dass** der Kohlenstoffgehalt kleiner als 100 ppm ist.

6. Verfahren zur Herstellung des Siliciumdioxidpulvers gemäß den Ansprüchen 1 bis 5,
**dadurch gekennzeichnet,**
**dass** man
- ein Gemisch von Siliciumverbindungen, getrennt oder gemeinsam, verdampft, die Dämpfe mittels eines Traggases in eine Mischkammer überführt, mit
- SiCl₄ als erster Komponente mit einem Anteil 60 bis 95 Gew.-% bezogen auf das Gemisch, und
- einer zweiten Komponente ausgewählt aus der Gruppe umfassend H₃SiCl, H₂SiCl₂, HSiCl₃, CH₃SiCl₃, (CH₃)₂SiCl₂, (CH₃)₃SiCl, (n-C₃H₇)SiCl₃, mit einem Anteil von 5 bis 40 Gew.-%, bezogen auf das Gemisch,
- und getrennt hiervon ein Brenngas, Primärluft, die gegebenenfalls mit Sauerstoff angereichert und/oder vorerhitzt sein kann, in die Mischkammer überführt,
- das Gemisch aus dem Dampf der Siliciumchloride, Brenngas und Primärluft in einem Brenner zündet und die Flamme in eine Reaktionskammer hinein verbrennt,
- Sekundärluft, die die Flamme umgibt, in die Reaktionskammer einbringt, wobei das Verhältnis von Sekundärluft/Primärluft in einem Bereich von 0,05 bis 3, bevorzugt 0,15 bis 2, liegt,
- anschließend den Feststoff von gasförmigen Stoffen abtrennt, und nachfolgend den Feststoff mit Wasserdampf bei 250°C bis 750°C behandelt,
wobei
- die Gesamtmenge an Sauerstoff mindestens ausreichend ist zur vollständigen Verbrennung des Brenngases und der Siliciumverbindungen und
- die Menge der Einsatzstoffe bestehend aus Siliciumverbindungen, Brenngas, Primärluft und Sekundärluft so gewählt ist, dass eine adiabate Flammentemperatur T_{ad} von 1570 bis 1630°C resultiert, mit
T_{ad} = Temperatur Einsatzstoffe + Summe der Reaktionsenthalpien der Teilreaktionen / Wärmekapazität der Stoffe, die die Reaktionskammer verlassen, umfassend Siliciumdioxid, Wasser, Chlorwasserstoff, Kohlendioxid Sauerstoff, Stickstoff, und gegebenenfalls des Traggases, wenn dieses nicht Luft oder Stickstoff ist,
wobei die spezifische Wärmekapazität dieser Stoffe bei 1000°C zugrunde gelegt wird.

7. Verfahren Anspruch 6,
**dadurch gekennzeichnet,**
**dass** die Temperatur der Einsatzstoffe 90°C ± 40°C ist.

8. Verfahren nach den Ansprüchen 6 oder 7,
**dadurch gekennzeichnet,**
**dass** die Austrittsgeschwindigkeit des Reaktionsgemisches aus der Mischkammer in die Reaktionskammer 10 bis 80 m/s ist.

## Claims

1. Fumed silica powder in the form of aggregates of primary particles,
**characterized in that**
- it has a BET surface area of 200 ± 25 m²/g and the aggregates
- have a mean area of 7000 to 12000 nm²,
- a mean equivalent circle diameter (ECD) of 80 to 100 nm and
- a mean circumference of 850 to 1050 nm.

2. Fumed silica powder according to Claim 1,
**characterized in that**
the aggregates
- have a mean area of 7500 to 9000 nm²,
- a mean equivalent circle diameter of 83 to 90 nm and
- a mean circumference of 870 to 1000 nm.

3. Fumed silica powder according to Claim 1 or 2,
**characterized in that**
the maximum aggregate diameter is between 150 and 170 nm and the minimum aggregate diameter is between 90 and 110 nm.

4. Fumed silica powder according to Claims 1 to 3,
**characterized in that**
the chloride content is less than 250 ppm.

5. Fumed silica powder according to Claims 1 to 4,
**characterized in that**
the carbon content is less than 100 ppm.

6. Process for preparing the silica powder according to Claims 1 to 5,
**characterized in that**
- a mixture of silicon compounds, separately or together, is evaporated, the vapours are transferred by means of a carrier gas into a mixing chamber, with
- SiCl₄ as the first component with a proportion of 60 to 95% by weight, based on the mixture, and
- a second component selected from the group comprising H₃SiCl, H₂SiCl₂, HSiCl₃, CH₃SiCl₃, (CH₃)₂SiCl₂, (CH₃)₃SiCl, (n-C₃H₇)SiCl₃, with a proportion of 5 to 40% by weight, based on the mixture,
- and, separately thereof, a combustion gas, primary air which may optionally be enriched with oxygen and/or preheated, is transferred into the mixing chamber,
- the mixture of the vapour of the silicon chlorides, combustion gas and primary air is ignited in a burner and the flame burns into a reaction chamber,
- secondary air which surrounds the flame is introduced into the reaction chamber, where the ratio of secondary air/primary air is within a range from 0.05 to 3, preferably 0.15 to 2,
- then the solid is removed from the gaseous substances, and subsequently the solid is treated with steam at 250°C to 750°C,
wherein
- the total amount of oxygen is at least sufficient for complete combustion of the combustion gas and of the silicon compounds and
- the amount of the feedstocks consisting of silicon compounds, combustion gas, primary air and secondary air is selected so as to result in an adiabatic flame temperature T_{ad} of 1570 to 1630°C, where
T_{ad} = temperature of feedstocks + sum of the reaction enthalpies of the component reactions/ heat capacity of the substances which leave the reaction chamber, comprising silica, water, hydrogen chloride, carbon dioxide, oxygen, nitrogen, and optionally the carrier gas if it is not air or nitrogen,
this being based on the specific heat capacity of these substances at 1000°C.

7. Process according to Claim 6,
**characterized in that**
the temperature of the feedstocks is 90°C ± 40°C.

8. Process according to Claim 6 or 7,
**characterized in that**
the exit velocity of the reaction mixture out of the mixing chamber into the reaction chamber is 10 to 80 m/s.

## Revendications

1. Poudre de dioxyde de silicium produite par pyrogénation, sous forme d'agrégats de particules primaires, **caractérisée en ce qu'**elle présente
- une surface BET de 200 ± 25 m²/g et les agrégats présentent
- une surface moyenne de 7 000 à 12 000 nm²,
- un diamètre de cercle équivalent (ECD = *Equivalent Circle Diameter*) moyen de 80 à 100 nm et
- une circonférence moyenne de 850 à 1 050 nm.

2. Poudre de dioxyde de silicium produite par pyrogénation selon la revendication 1, **caractérisée en ce que** les agrégats présentent
- une surface moyenne de 7 500 à 9 000 nm²,
- un diamètre de cercle équivalent moyen de 83 à 90 nm et
- une circonférence moyenne de 870 à 1 000 nm.

3. Poudre de dioxyde de silicium produite par pyrogénation selon la revendication 1 ou 2, **caractérisée en ce que** le diamètre maximum d'agrégat est compris entre 150 et 170 nm et le diamètre minimum d'agrégat est compris entre 90 et 110 nm.

4. Poudre de dioxyde de silicium produite par pyrogénation selon les revendications 1 à 3, **caractérisée en ce que** la teneur en chlore est inférieure à 250 ppm.

5. Poudre de dioxyde de silicium produite par pyrogénation selon les revendications 1 à 4, **caractérisée en ce que** la teneur en carbone est inférieure à 100 ppm.

6. Procédé pour la production de la poudre de silicium selon les revendications 1 à 5, **caractérisé en ce que**
- on vaporise un mélange de composés de silicium, séparément ou ensemble, on transfère les vapeurs, au moyen d'un gaz porteur, dans une chambre de mélange, le mélange comportant
- SiCl₄ en tant que premier composant, en une proportion de 60 à 95 % en poids, par rapport au mélange, et
- un second composant, choisi dans le groupe comprenant H₃SiCl, H₂SiCl₂, HSiCl₃, CH₃SiCl₃, (CH₃)₂SiCl2, (CH₃)₃SiCl, (n-C₃H₇)SiCl₃, en une proportion de 5 à 40 % en poids, par rapport au mélange ;
- et séparément de celui-ci on transfère dans la chambre de mélange un gaz de combustion, de l'air primaire, qui peut éventuellement être enrichi avec de l'oxygène et/ou préchauffé,
- on allume dans un brûleur le mélange constitué de la vapeur des chlorures de silicium, de gaz de combustion et d'air primaire et la flamme brûle à l'intérieur d'une chambre de réaction,
- on introduit dans la chambre de réaction de l'air secondaire qui entoure la flamme, le rapport air secondaire/air primaire se situant dans une plage allant de 0,05 à 3, de préférence de 0,15 à 2,
- puis on sépare la matière solide des substances gazeuses, et ensuite on traite la matière solide par de la vapeur d'eau à 250 °C - 750 °C,
où
- la quantité totale d'oxygène est au moins suffisante pour la combustion totale du gaz de combustion et des composés siliciés et
- la quantité des matières premières consistant en composés siliciés, gaz de combustion, air primaire et air secondaire est choisie de manière qu'il en résulte une température de flamme adiabatique T_{ad} de 1 570 à 1 630 °C, où
T_{ad} = température des matières premières + somme des enthalpies de réaction des réactions partielles / capacité calorifique des substances qui quittent la chambre de réaction, comprenant dioxyde de silicium, eau, chlorure d'hydrogène, dioxyde de carbone, oxygène, azote et éventuellement le gaz porteur, si celui-ci n'est pas l'air ni l'azote,
en prenant pour base la capacité calorifique spécifique de ces substances à 1 000 °C.

7. Procédé selon la revendication 6, **caractérisé en ce que** la température des matières premières est de 90 °C ± 4 °C.

8. Procédé selon la revendication 6 ou 7, **caractérisé en ce que** la vitesse de sortie du mélange réactionnel, sortant de la chambre de mélange pour pénétrer dans la chambre de réaction, est de 10 à 80 m/s.
